# EUROPÄISCHE PATENTANMELDUNG

(11) **EP 0 659 963 A1**
(43) Veröffentlichungstag der Anmeldung: **28.06.1995**
(21) Anmeldenummer: 93120555.3
(22) Anmeldetag: 20.12.1993
(51) Int. Cl.: E05B 49/00, B60R 25/04

(54) **Elektronische Wegfahrsperre für ein Kraftfahrzeug**

(71) Anmelder: SIEMENS AKTIENGESELLSCHAFT, D-80333 München (DE)
(72) Erfinder: Reinhardt, Siegfried, Dipl.-Ing., D-90522 Oberasbach (DE)

(57) **Zusammenfassung**

Die Wegfahrsperre weist einen Schlüssel (1) auf, auf dem unabhängig voneinander eine Sendeeinheit ()5 und ein Transponder (13) untergebracht sind. Bei Betätigen einer Taste (3) des Schlüssels (1) wird durch die Sendeeinheit (5) ein Codesignal zu einem Empfänger (2) im Kraftfahrzeug übertragen, wodurch die Türen ver- oder entriegelt werden. Außerdem dient dieses Codesignal zum Freigeben der Wegfahrsperre. Wenn der Schlüssel (1) im Lenkradschloß (10) steckt, wird vom Transponder (13) ebenfalls ein Codesignal zum Aufheben der Wegfahrsperre übertragen. Somit ist selbst bei Ausfall entweder des Transponders (13) oder der Sendeeinheit (5) eine Verfügbarkeit des Kraftfahrzeugs gewährleistet.

## Beschreibung

Die Erfindung betrifft eine elektronische Wegfahrsperre für ein Kraftfahrzeug gemäß dem Oberbegriff von Patentanspruch 1.

Eine solche Wegfahrsperre (US 4,918,955) weist einen Transponder auf, der in Form eines Schlüssels ausgebildet ist und in einem Lenkradschloß steckt. Nach Anregung durch ein Anforderungssignal sendet der Transponder ein Codesignal aus, durch das die Wegfahrsperre gelöst wird.

Eine solche elektronische Wegfahrsperre kann jedoch nur verhindern, daß das Kraftfahrzeug unberechtigterweise gestartet wird. Für das Ver- oder Entriegeln der Fahrzeugtüren wird ein weiterer Schlüssel benötigt, der in ein fernbedienbares Schließsystem, wie es beispielsweise aus EP 0 536 430 A1 bekannt ist, eingebunden ist. Das Schließsystem weist einen tragbaren Sender mit einer Sendeeinheit auf, die ein Infrarot-, Ultraschall- oder Hochfrequenz-Codesignal nach Betätigen eines Bedienelements, wie z.B. einer Taste, an eine Empfangseinheit im Kraftfahrzeug aussendet, wodurch eine oder mehrere Fahrzeugtüren ver- oder entriegelt werden können.

Das Schließsystem kann jedoch nur Türen des Kraftfahrzeugs ver- oder entriegeln. Weist das Kraftfahrzeug eine Wegfahrsperre auf, so kann das Fahrzeug nur mit Hilfe des Transponders gestartet werden. Falls der Transponder defekt sein sollte, so kann das Kraftfahrzeug nicht bewegt werden.

Der Erfindung liegt das Problem zugrunde, eine elektronische Wegfahrsperre zu schaffen, die für eine hohe Verfügbarkeit des Kraftfahrzeug sorgt.

Das Problem wird durch die Merkmale des Patentanspruchs 1 gelöst. Vorteilhafte Weiterbildungen sind in den Unteransprüchen gekennzeichnet.

Ein Ausführungsbeispiel der Erfindung ist im folgenden unter Bezugnahme auf die schematischen Zeichnungen näher erläutert.
Es zeigen:
- Figur 1:: ein Kraftfahrzeug mit einer erfindungsgemäßen, elektronischen Wegfahrsperre und
- Figur 2:: einen Schlüssel der Wegfahrsperre im Lenkradschloß des Kraftfahrzeugs.

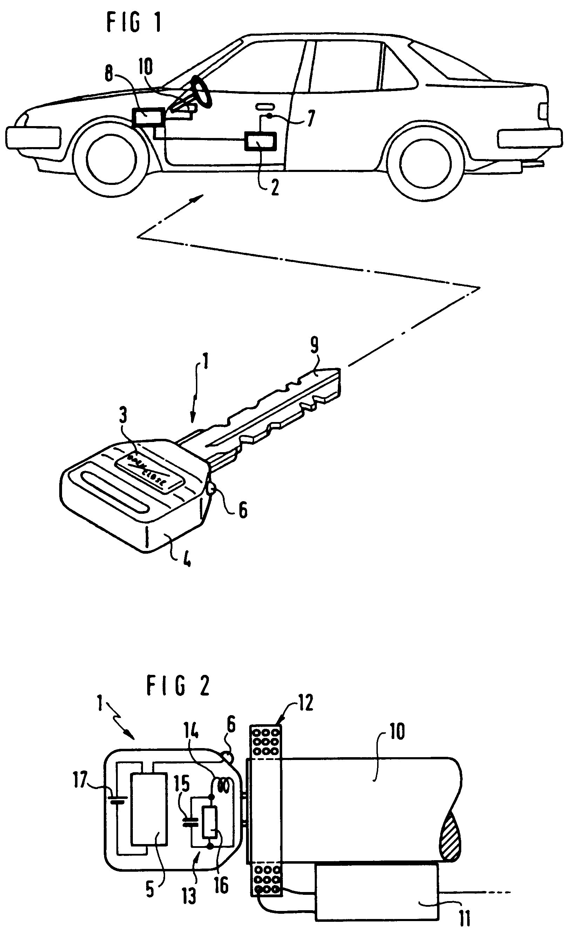

Eine erfindungsgemäße elektronische Wegfahrsperre weist einem tragbaren Sender 1 (Figur 1) in Form eines Schlüssels (deswegen nachfolgend als Schlüssel 1 bezeichnet) und einen stationären Empfänger 2 in einem Kraftfahrzeug auf. Bei Betätigen einer Taste 3 am Griff 4 des Schlüssels 1 wird mit Hilfe von einer Sendeeinheit 5 (vgl. Figur 2) und einem Sendeelement 6 ein Infrarot- (IR-), ein Ultraschall- (US) oder ein Hochfrequenz- (HF-)Codesignal zum Empfänger 2 übertragen.

Es ist für die Erfindung unwesentlich, ob dieses Codesignal (im folgenden als Sendercodesignal bezeichnet) per Licht, Schall oder Funk übertragen wird.

Der Empfänger 2 vergleicht das empfangene Sendercodesignal mit einem im Empfänger 2 gespeicherten oder mit Hilfe eines Algorithmus errechneten Sollcodesignals. Wenn die beiden Codesignale übereinstimmen, wird ein Steuersignal erzeugt, das an eine nicht dargestellte, elektromechanische Betätigungseinheit geschickt wird, die das oder mehrere Türschlösser 7 des Kraftfahrzeugs ver- oder entriegelt.

Wenn die beiden Codesignale übereinstimmen, wird auch ein Freigabesignal an eine elektronische Wegfahrsperre gegeben, die hierdurch freigegeben wird und das Kraftfahrzeug gestartet werden kann. Die Wegfahrsperre kann beispielsweise in einem Motorsteuergerät 8 enthalten sein. Sie kann aber auch in sonstigen, für den Betrieb des Kraftfahrzeugs notwendigen Steuereinheiten untergebracht sein. Sie verhindert, daß das Kraftfahrzeug unberechtigterweise gestartet werden kann.

Nachdem mittels Fernbedienung die Fahrzeugtüren geöffnet sind, kann der Schlüssel 1 mit seinem Schlüsselbart 9 in das Lenkradschloß 10 gesteckt werden (Figur 2). Sobald der Schlüssel 1 eingeführt wird, wird über eine schloßseitige Elektronikeinheit 11 eine Schloßspule 12 veranlaßt, ein niederfrequentes Anforderungssignal in Form eines Energie- und/oder Codesignals, an einen Transponder 13 im Schlüssel 1 induktiv zu übertragen.

Der Transponder 13 ist ein passives Element, das durch ein Anforderungssignal veranlaßt wird, seinerseits ein Signal auszusenden.

Die Schloßspule 12 ist axial um den Zylinder des Lenkradschlosses 10 herum angeordnet und bildet zusammen mit einer Schlüsselspule 14 des Transponders 13 einen induktiven Übertrager, wenn sich der Schlüssel 1 in unmittelbarer Umgebung des Lenkradschlosses 10 befindet. Nur dann können Signale induktiv hin- und zurück übertragen werden.

Das Anforderungssignal wird von der Schlüsselspule 14 empfangen. Dem Anforderungssignal wird Energie entnommen und in einem Energiespeicher, z.B. einem Kondensator 15 zwischengespeichert. Diese Energie reicht aus, um eine schlüsselseitige Elektronikeinheit 16 mit Energie zu versorgen. Die Elektronikeinheit 16 des Transponders 13 moduliert das Anforderungssignal und überträgt ihrerseits ein Codesignal mit Hilfe der Schlüsselspule 14 zurück zu der Schloßspule 12.

Wenn das zurückübertragene Codesignal mit einem Sollcodesignal übereinstimmt, so wird ebenfalls ein Freigabesignal an die Wegfahrsperre geleitet, das die Freigabe der Wegfahrsperre auslöst. Das Kraftfahrzeug kann nun gestartet werden.

Damit die Sendeeinheit 5 und der Transponder 13 unabhängig voneinander sind, hat jede Einheit ihre eigene Energieversorgung. Der Transponder 13 wird von dem Kondensator 15 mit Energie versorgt, wobei der Kondensator 15 durch die Energiefernübertragung geladen wird. Die Sendeeinheit 5 wird dagegen von einer Batterie 17 oder einem Akkumulator mit Energie versorgt.

Die Wegfahrsperre wird freigegeben, sobald entweder über die Sendeeinheit 5 oder über den Transponder 13 ein berechtigtes Codesignal ausgesendet wird. Somit wird das Risiko minimiert, daß bei Ausfall entweder des Transponders 13 oder der Sendeeinheit 5 das Kraftfahrzeug nicht mehr zu bewegen ist.

Falls einerseits die Sendeeinheit 5 defekt sein sollte, so kann dennoch mit dem mechanischen Schlüssel 1, d.h. durch Einstecken und Umdrehen des Schlüsselbarts 9 in das Türschloß 7, das Kraftfahrzeug mechanisch geöffnet werden. Nachdem das Kraftfahrzeug offen ist, kann der Schlüssel 1 in das Lenkradschloß 10 gesteckt werden. Infolgedessen wird das Freigabesignal mit Hilfe des noch funktionstüchtigen Transponders 13 erzeugt und das Kraftfahrzeug kann gestartet werden.

Gesetzt den Fall, daß andererseits der Transponder 13 defekt ist, so kann - bei funktionstüchtiger Sendeeinheit 5- durch Betätigen der Taste 3 des Schlüssels 1 das Sendercodesignal erzeugt werden. Bei Übereinstimmung mit dem Sollcodesignal werden die Fahrzeugtüren geöffnet. Gleichzeitig wird das Freigabesignal ausgelöst und die Wegfahrsperre aufgehoben. Das Kraftfahrzeug kann dann ebenfalls gestartet werden.

Durch diese elektronische Wegfahrsperre ist eine hohe Verfügbarkeit des Kraftfahrzeugs gewährleistet. Das Kraftfahrzeug kann selbst dann noch gestartet werden, wenn entweder die Sendeeinheit 5 oder der Transponder 13 defekt sind. Somit ist das Risiko minimiert, daß das Kraftfahrzeug trotz Berechtigung nicht gestartet werden kann.

Die übertragenen Codesignale können aus einem sogenannten Festcode stammen. Dabei wird immer das gleiche Codesignal übertragen. Sie können aber auch aus einem Wechselcode entnommen sein, bei dem das Codesignal immer wieder neu berechnet wird.

Der Sender 1 ist nicht auf die Form eines Schlüssels begrenzt. So kann der Sender 1 auch in Form einer Chipkarte ausgebildet sein. Der Sender 1 kann auch durch andere funktionell gleichwertige Formen realisiert sein.

## Patentansprüche

1. Elektronische Wegfahrsperre für ein Kraftfahrzeug mit einem tragbaren Sender (1), der Transponder (13) aufweist, der nach Anregung durch ein Anforderungssignal ein Niederfrequenz-Codesignal aussendet, wobei das Niederfrequenz-Codesignal die Freigabe einer Wegfahrsperre auslöst, wenn es mit einem Referenzcodesignal übereinstimmt,
**dadurch gekennzeichnet**, **daß**
der Sender (1) zudem eine Sendeeinheit (5) aufweist, die ein Infrarot-, Ultraschall- oder Hochfrequenz-Codesignal nach Betätigen eines Bedienelements (3) aussendet, wobei das Infrarot-, Ultraschall- oder Hochfrequenz-Codesignal sowohl das Ver- oder Entriegeln einer oder mehrerer Fahrzeugtüren als auch die Freigabe der Wegfahrsperre auslöst, wenn es mit dem Referenzcodesignal übereinstimmt.

2. Wegfahrsperre nach Anspruch 1, **dadurch gekennzeichnet**, daß der Transponder (13) eine Schlüsselspule (14) aufweist, die zusammen mit einer Schloßspule (12) einen induktiven Übertrager bildet, wenn sich der Sender (1) in unmittelbarer Nähe des Lenkradschlosses (10) befindet.

3. Wegfahrsperre nach Anspruch 1, **dadurch gekennzeichnet**, daß der Sender (1) in Form eines Schlüssels ausgebildet ist und einen Schlüsselbart (9) aufweist, mit dem die Fahrzeugtüren auch mechanisch ver- oder entriegelt werden können.

4. Wegfahrsperre nach Anspruch 1, **dadurch gekennzeichnet**, daß der Transponder (13) einen Energiespeicher (15) aufweist, der durch Energiefernübertragung aufgeladen wird und der eine senderseitige Elektronikeinheit (16) mit Energie versorgt.
